# EUROPÄISCHE PATENTANMELDUNG

(11) **EP 1 741 673 A2**
(43) Veröffentlichungstag der Anmeldung: **10.01.2007**
(21) Anmeldenummer: 06013624.9
(22) Anmeldetag: 30.06.2006
(51) Int. Cl.: C01D 7/00

(54) **Verfahren zur Gewinnung von Kaliumkarbonat aus Asche biogener Brennstoffe**

(30) Priorität: 04.07.2005 AT 11292005
(71) Anmelder: SF SOEPENBERG-COMPAG GMBH, 3500 Krems (AT)
(72) Erfinder: Steindl, Roman, Dipl.-Ing., 3910 Zwettl (AT); Gumpinger, Franz, Ing., 3571 Gars am Kamp (AT)
(74) Vertreter: Krause, Peter

(57) **Zusammenfassung**

Die Erfindung betrifft ein Verfahren, eine Einrichtung und eine Anlage zur Gewinnung von Kaliumkarbonat aus Asche von biogenen Brennstoffen, insbesondere Biomasseasche, die bei Verbrennungstemperaturen über 700°C, insbesondere über 800°C, anfällt. Die Asche wird in einem Mischvorgang in einem Mischbehälter (1) mit Wasser einer Sprühdüsenanordnung (2) befeuchtet. Die mit Wasser befeuchtete Asche wird mit Kohlendioxid, insbesondere einer Kohlendioxid enthaltenden Abluft aus der Rohrleitung (7), wie beispielsweise Verbrennungsabluft, bis zum Eintritt einer Neutralisation der alkalischen Hydroxide karbonatisiert. Während des Vorganges wird die Asche über Schwingerreger (6) bewegt. Anschließend wird aus dem entstandenen Asche-Granulat das Kaliumkarbonat mit Wasser heraus gewaschen und in der Auffangwanne (5) gesammelt. Die Kaliumkarbonat-Lösung wird in einem Verdampfer (9) auf eine 10-61%ige, vorzugsweise 40-50%ige, Lösung eingedampft.

## Beschreibung

Die Erfindung betrifft ein Verfahren zur Gewinnung von Kaliumkarbonat aus Asche von biogenen Brennstoffen, insbesondere Biomasseasche, die bei Verbrennungstemperaturen über 700°C, insbesondere über 800°C, anfällt.

Es ist schon lange bekannt aus Pottasche Kaliumkarbonat herzustellen. Wie ja an sich bekannt, wird die Pottasche aus Holzasche gewonnen. Diese Holzasche wird insbesondere aus Buchenholz mit einer Verbrennungstemperatur von etwa 600°C gewonnen und enthält reichlich Kalium. Die Holzasche wird in Holzbottichen, die Siebböden aufweisen, ausgelaugt, bis die Lösung etwa 25% Salze enthält. Die Lauge wird dann in Töpfen, in so genannten Pötten, eingedampft. Verwendet wurde die Pottasche zur Herstellung von Seifen und Glas.

Dieses historische Gewinnungsverfahren aus Hartholzaschen, durch Auslaugen mit heißem Wasser im Pott, wurde in der moderneren chemischen Industrie durch Elektrolyse kaliumhältiger Salze und Karbonatisierung der erhaltenen Kalilaugen ersetzt. Diese bekannten Gewinnungsverfahren sind aber mit einem erheblichen Energieaufwand verbunden, einerseits für die Elektrolyse, andererseits für die Prozesstechnik und Trocknung. In relativ kurzer Zeit können große Menge Kaliumcarbonat gewonnen werden. Allerdings sind die Herstellkosten dadurch erheblich und stark vom Energiepreis abhängig.

Verwendung findet Kaliumkarbonat als alternatives Auftaumittel. Über den Einfluss auf die Vegetation und die belasteten Böden wird auf die ausführlichen Dokumentationen, beispielsweise der Universität für Bodenkultur in Wien, verwiesen.

Das Ergebnis aller bisher durchgeführten Studien besagt, dass Kaliumkarbonat als einziges Auftaumittel zur präventiven Anwendung ohne dramatische, negative Auswirkungen auf die Vegetation und die belasteten Böden anwendbar ist. Vor allem bei sauren Böden mit geringen Anteilen von Calcium- und Magnesiumsalzen bewirkt die Anwendung von Kaliumkarbonat durch die Anhebung des Bodens pH-Wertes sogar eine deutliche Verbesserung des Substrates.

Bezüglich der Verwendung von Biomasseaschen liegen umfangreiche Ergebnisse und Studien bereits durchgeführter Arbeiten vor, in welchen ausführlich über die Problematik der Schwermetallkonzentrationen in den einzelnen Aschefraktionen, Rostasche, Zyklonasche und Elektrofilterasche berichtet wird.

Leider wird der Einsatz von Biomasseaschen in der Land- und Forstwirtschaft noch nicht in dem Ausmaß durchgeführt, wie das bereits technisch möglich wäre. Einerseits stehen die hohe Staubentwicklung und die hohe Alkalität, welche den Landwirt bei der Ausbringung belasten, entgegen, andererseits bedingen die hohen Anteile an grober Schlacke und Sekundärverunreinigungen der Aschen, wie Steine und Metallteile, dass es noch keine vernünftigen Systeme zur Ausbringung gibt. Nicht unerheblichen Einfluss nimmt auch die von den Land- und Forstwirten befürchtete, noch nicht verlässlich unter Kontrolle befindliche Schwermetallbelastung der Aschen, wenngleich zahlreiche Schwermetalle einerseits als essentielle Spurenelemente für eine gesunde Vegetation in bestimmter Konzentration im Boden vorhanden sein müssen, andererseits regional bedeutend höhere Konzentrationen geogen bedingt bereits jetzt im Boden, sei es natürlich oder auch durch Deposition aus der Umwelt, vorhanden sind. Durch die Schwermetallgehalte über den Grenzwerten wird der Einsatz als Düngemittel oder Bodenverbesserungsmittel bisher stark beeinträchtigt. Erhebliche Mengen an Biomasseasche landen daher auf Deponien.

Aufgabe der Erfindung ist es daher, einerseits die obigen Nachteile zu vermeiden und anderseits auf Grund der aufgezeigten Zusammenhänge den dringenden Bedarf nach wirtschaftlicheren Rohstoffquellen zur Gewinnung von Kaliumkarbonat und der Verwendung als ökologisch vorteilhaftes Auftaumittel zu erschließen. Weiters ist es Aufgabe der Erfindung einen Weg zur sinnvollen Verwertung der exponentiell ansteigenden Aschemengen aus der Verwendung von biogenen Energieträgern, wie beispielsweise Holzhackgut, Baumrinde, Sägespänen, Stroh oder Ganzpflanzen, zu schaffen.
Die Aufgabe wird durch die Erfindung gelöst.

Das erfindungsgemäße Verfahren ist dadurch gekennzeichnet, dass
- die Asche in einem Mischvorgang mit Wasser befeuchtet wird, so dass sie einen Wassergehalt von etwa 10-100%, vorzugsweise 40-60%, aufweist,
- dass die mit Wasser befeuchtete Asche mit Kohlendioxid, insbesondere einer Kohlendioxid enthaltenden Abluft, wie beispielsweise Verbrennungsabluft, bis zum Eintritt einer Neutralisation der alkalischen Hydroxide karbonatisiert wird, wobei während des Vorganges die Asche bewegt wird und
- anschließend aus dem entstandenen Asche-Granulat das Kaliumkarbonat mit Wasser heraus gewaschen wird, bis der Kaliumkarbonat-Gehalt des Granulates gegen Null geht und
- dass die Kaliumkarbonat-Lösung auf eine 10-61 %ige, vorzugsweise 40-50%ige, Lösung eingedampft wird.

Mit der Erfindung ist es erstmals möglich, ein biologisch unbedenkliches, auch präventiv einsetzbares, Auftaumittel für den öffentlichen und privaten Winterdienst herzustellen, dessen Aufwendungen für die Herstellung in einem ausgezeichneten wirtschaftlichen Rahmen der Kostenstruktur liegen. Kaliumkarbonat ist sowohl als präventives Auftaumittel als auch als Zumischung zu sogenannten abstumpfenden Streumitteln auf Basis von Tongranulaten verwendbar.

Ferner wird eine wirtschaftlich sinnvolle und umweltverträgliche Verwertung der anfallenden Asche ermöglicht. Dies ist vor allem in Hinblick darauf wichtig, dass durch die verstärkte Nutzung biogener Energieträger, wie Waldhackgut, Rinde, Sägenebenprodukte, Stroh, Ganzpflanzen, zur Fern- und Prozesswärmebereitstellung und zur Energiebereitstellung über Biomassevergasung im Zuge der Kraft-Wärme Kopplung diesem Problem eine stark steigende Bedeutung zukommt. Im Zentrum des Interesses steht dabei auch die Wiedereingliederung der Asche in natürliche Wachstumsprozesse im Bereich der forst- und landwirtschaftlichen Bodennutzung, beispielsweise zur Schließung des Mineralienkreislaufes.

Nach einem weiteren Merkmal der Erfindung wird die Asche vor dem Befeuchten mit Wasser einer analytischen Qualitätskontrolle unterzogen. Über eine derartige Analyse kann die Zusatzmenge des Wassers für den Mischvorgang ermittelt werden. Der Wassergehalt in der Asche ist für den nachfolgenden Verfahrensschritt der Karbonatisierung von Wichtigkeit. Ferner können durch die Analyse über längere Zeiträume für die verfügbaren Aschequalitäten und Aschemengen in Abhängigkeit von der Biomasseart Aussagen getroffen werden.

Gemäß einem weiteren besonderen Merkmal der Erfindung überschreitet die Reaktionstemperatur beim Vorgang der Karbonatisierung 100°C nicht. Die optimale Reaktionstemperatur wird derart gewählt, dass die Kalzium- und Magnesiumkarbonate in ihrer Löslichkeit eingeschränkt sind. Die Reaktionstemperatur darf aber auch nicht zu hoch, über 100°C, gewählt werden, da sonst die Kohlendioxid-Löslichkeit im Wasser reduziert wird.

Nach einem weiteren besonderen Merkmal der Erfindung wird die Reaktionstemperatur während des Karbonatisierens, vorzugsweise kontinuierlich, gemessen und der aufgezeichnete Temperaturverlauf zur Kontrolle der Reaktion, insbesondere zur Regelung der Zufuhr von Kohlendioxid, herangezogen. Natürlich hat die Reaktionstemperatur Einfluss auf die Reaktionszeit, da ja ein exothermer Prozess vorliegt. Über die Reaktionstemperatur kann ein optimaler Prozessablauf gewährleistet werden.

Gemäß einer Weiterbildung der Erfindung wird die Reaktionszeit beim Vorgang der Karbonatisierung über die Zuführung des Kohlendioxids gesteuert. Wie bereits oben erwähnt, ist für den Prozess ein direkter Zusammenhang von Reaktionstemperatur und Reaktionszeit gegeben. Da natürlich eine sehr kurze Reaktionszeit angestrebt wird, ist die Zufuhrmenge des Kohlendioxids eine Steuer- bzw. Regelgröße.

Nach einer besonderen Ausgestaltung der Erfindung wird der pH-Wert der Asche und/oder des Eluates, vorzugsweise kontinuierlich, gemessen. Dadurch ist eine weitere Möglichkeit der Steuerung des Prozesses gegeben.
Gemäß einer weiteren besonderen Ausgestaltung der Erfindung wird die Asche nach dem Herauswaschen des Kaliumkarbonates getrocknet. Da die zur Zeit angewandte Abrechnungspraxis der Deponiebetreiber sich auf sämtliche eingebrachten Abfälle bezieht, werden diese nach der deponierten Masse berechnet. Das würde für die zu deponierenden Restbiomasseaschen bedeuten, dass die Restfeuchtigkeit mitbezahlt werden müsste, was natürlich nicht im Sinne einer verantwortungsvollen Lösung für die Verwertung von Biomasseasche sein kann. Eine Trocknung der zur Deponie gelangenden Restbestände erhöht somit die Wirtschaftlichkeit, vor allem bei Einsatz von Solarwärme oder Abwärme.

Nach einer besonderen Weiterbildung der Erfindung wird das Kaliumkarbonat in einem Verdampfungsprozess konzentriert und die Karbonate der weiteren Kationen fallen als feste Salze aus. Dadurch wird eine Trennung der Salze in einem äußerst wirtschaftlichen Schritt erreicht.

Die Erfindung hat auch eine starke Umweltrelevanz, die in drei Ebenen gegeben ist:
1. es wird ein ökologisches Auftaumittel hergestellt,
2. es findet eine innovative Abfall bzw. Wertstoff Verwendung statt,
3. es wird die Biomassewertschöpfung erhöht.

Die Herstellung von geeignet konzentrierten Kaliumkarbonatlösungen als ökologisches Auftaumittel mittels kostengünstigen Karbonatisierungs-, Extraktions- und Gradierungsschritten unter maximaler Ausnützung der vorhandenen Ressourcen wie Verbrennungsabluft, Restwärme der Verbrennungsabluft und Extraktionszeit ermöglicht den Einsatz dieser für die Umwelt vorteilhaften Alternative zu niedrigeren Kosten als die derzeitigen großtechnischen Verfahren. Damit wird Kaliumkarbonat deutlich günstiger als derzeit verfügbar und damit auch zu einer wirtschaftlich sinnvollen Alternative zu Natriumchlorid.

Der Ersatz von Natriumchlorid als Winterstreusalz ist erwiesenermaßen von extremem Vorteil für die an die Straßen angrenzende Vegetation, wie auch aus einschlägigen Studien dargelegt wird. Die Auswirkungen von Kaliumcarbonat als Streusalz auf die Vegetation werden nach den vorhandenen Untersuchungen als vorteilhaft beschrieben. Im Vergleich zu stickstoffhaltigen Auftaumitteln wie Harnstoff oder Ammonsulfate führt Kaliumcarbonat nicht zur Eutrophierung der Oberflächenwasser und damit zu keiner Belastung der oberflächennahen natürlichen Gewässer.

Weiters bestätigt die bisherige Praxis, dass in den seltensten Fällen Biomasseasche bisher als Bodendünger auf Grund seines Kaliumgehaltes verwendet wird, wenngleich das auf Grund der ermittelten Grenzwerte für die enthaltenen Schwermetalle in der Asche für Rost- und Zyklonaschen möglich wäre. Der Grund dafür liegt einerseits in der hohen Staubbelastung beim Ausbringen der Aschen, anderseits in der sehr hohen Alkalität der Asche auf Grund der Calcium- und Kaliumhydroxidgehalte moderner Aschen. Beide Nachteile werden durch die Erfindung gelöst. Einerseits werden durch die Karbonatisierung der Alkali- und Erdalkalioxide bzw. Hydroxide die pH-Werte deutlich reduziert, anderseits fällt die feuchte verbleibende Restasche nach der Extraktion in einer nicht staubenden, granulierten Form an.

Der deutlich reduzierte Kaliumgehalt der Restasche führt beim Einsatz als durchaus sinnvolles Bodenverbesserungsmittel in intensiv bewirtschafteten Flächen oder sauren Böden zu einer Erhöhung der möglichen Ausbringungsmengen pro Fläche, da bisher diese Mengen durch den Kaliumgehalt nach oben limitiert sind.

Insgesamt ist daher nach der erfindungsgemäßen Behandlung der Biomasseaschen mit steigenden Einsatzmengen von Biomasseaschen in Land- und Forstwirtschaft zu rechnen. Der Mineralkreislauf der Biomasseverfahren wird somit besser geschlossen. Die jährlich nicht weiter nützlichen Aschemengen in den Hausmülldeponien werden deutlich reduziert.

Durch die Erfindung wird eine deutliche Verbesserung der Biomassewertschöpfung erreicht. Alleine bereits die sinnvolle Verwendung des Kaliumgehaltes erzielt einen wirtschaftlichen Mehrertrag, der der gesamten Biomasseverwertung zu Gute kommt.

Auch die Nachhaltigkeit gemäß heutigen Richtlinien ist gegeben. Einerseits wird ein ökologisch vorteilhafteres Produkt erzeugt, anderseits werden zur Herstellung des selben Biomasseaschen verwendet, die im Sinne des Abfallwirtschaftsgesetzes zwar als ungefährliche Abfälle gesehen werden, bisher aber ungenutzt in Deponien landen.

Zu letzt erfolgt durch die Karbonatisierung der Alkali- und Erdalkalioxide bzw. Hydroxide eine nicht unerhebliche Bindung an Kohlendioxid aus der Verbrennung der Biomasse, wenngleich Biomasseverfahren ohnehin als kohlendioxidneutral eingestuft sind.

Weiters ist es Aufgabe der Erfindung auch eine Einrichtung und eine Anlage zur Durchführung des oben aufgezeigten Verfahrens zu schaffen.

Die erfindungsgemäße Einrichtung zur Durchführung des Verfahrens ist dadurch gekennzeichnet, dass für den Mischvorgang ein Mischbehälter vorgesehen ist, der in seinem unteren Bereich konisch ausgebildet ist und mit einem Siebboden und gegebenenfalls einem Tragrost zu einer Auffangwanne nach unten abschließt, wobei der Mischbehälter über mindestens einen Schwingungserreger bewegbar ist. Mit der erfindungsgemäßen Einrichtung wird die Basis für die Wirtschaftlichkeit einer Weiterbearbeitung der Biomasseasche gelegt. Da keine mechanischen Rührelemente vorgesehen sind, ist ein niedriger Verschleiß gegeben, wodurch geringe Instandhaltungskosten anfallen. Weiters sind dadurch auch keine empfindlichen Rührwerkslagerungen in Kontakt mit der Asche. Durch die Bewegung über Schwingerreger ist eine schonende Mischung und gute Granulierung gewährleistet, die nur mit einer geringsten Staubentwicklung verbunden ist. Weiters werden durch die gleichmäßige Bewegung der Asche Strömungskanäle im Mischgut vermieden. Trotzdem ist nur ein geringer Druckverlust bei der Durchströmung mit kohlendioxidhaltiger Abluft gegeben.

Nach einem weiteren Merkmal der Erfindung ist über dem nach oben offenen Mischbehälter oder im oberen Bereich des Mischbehälters eine Wasserzuführung, insbesondere eine Sprühdüsenanordnung, vorgesehen. Es wird dadurch ein flächiger Wassereintrag und somit eine homogene Verteilung gewährleistet, die nur geringe Mischzeiten erfordert.

Gemäß einer Ausgestaltung der Erfindung ist der Mischbehälter als lang gestreckte Wanne ausgebildet, wobei der Transport der befeuchteten Asche über, von den Schwingungserregern erzeugte, gerichtete Schwingungen erfolgt. Dadurch kann das erfindungsgemäße Verfahren als kontinuierliches Verfahren geführt werden.

Die erfindungsgemäße Anlage zur Durchführung des Verfahrens ist mit einer oben aufgezeigten Einrichtung versehen und ist dadurch gekennzeichnet, dass die Auffangwanne des Mischbehälters für das Eluat mit einem Verdampfer über eine Rohrleitung verbunden ist und der Verdampfer als Wärmetauscher ausgebildet ist. Dadurch ist ein einfacher Wasserkreislauf gegeben, der die Wiederverwendung des abgedampften Wassers nach einer Kondensation zulässt. Ein weiterer Vorteil ist dadurch gegeben, dass mitgeschleppte gelöste Fremdsalze zum Großteil im Verdampfer ausfallen und dort abgetrennt werden. Die notwendige Verdampfungsenergie kann aus kostenneutraler Restabwärme bezogen werden.

Nach einer vorteilhaften Weiterbildung der Erfindung ist der Verdampfer zur Gewinnung der mitgeschleppten und durch die Aufkonzentration und Erwärmung ausgefallenen Fremdsalze ausgebildet. Die Kaliumkarbonatlösung kann durch einfache Filtrationstechniken geklärt werden. Zur weiteren Reinigung der Lösung können bekannte Verfahren, wie beispielsweise Osmosemembranen oder Elektrodialyseschritte, eingesetzt werden.

Gemäß einer besonders vorteilhaften Ausgestaltung der Erfindung wird kohlendioxidhaltige Verbrennungsluft eines Biomasse-Heizkraftwerkes in den Wärmetauscher des Verdampfers und anschließend zur Karbonatisierung in den Mischbehälter geleitet. Dadurch wird die Wirtschaftlichkeit erhöht, da keine Energiekosten für diesen Schritt anfallen, sondern eine Nutzung der Restabwärme erfolgt. Weiters wird durch die Verwendung von Kohlendioxid die Kohlendioxidbelastung der Atmosphäre, auch in Hinblick auf die Kioto Ziele, reduziert.

Nach einer besonderen Weiterbildung der Erfindung wird das aus dem Verdampfer entweichende Kondensat in einem Kondensator regeneriert, wobei der Kondensator mit der Wasserzuführung des Behälters verbunden ist. Es ergibt sich dadurch eine kostenneutrale Verwendung von Wasser als Lösungsmittel.

Gemäß einem besonderen Merkmal der Erfindung findet die Kaliumkarbonatlösung als Auftaumittel und/oder zur Herstellung von abstumpfenden Streumitteln und/oder zur Gewinnung von festem Kaliumkarbonat Verwendung. Ein wirtschaftlich herstellbares und ökologisch hervorragend geeignetes Streumittel, sei es in flüssiger oder fester Form, ist dadurch gegeben.

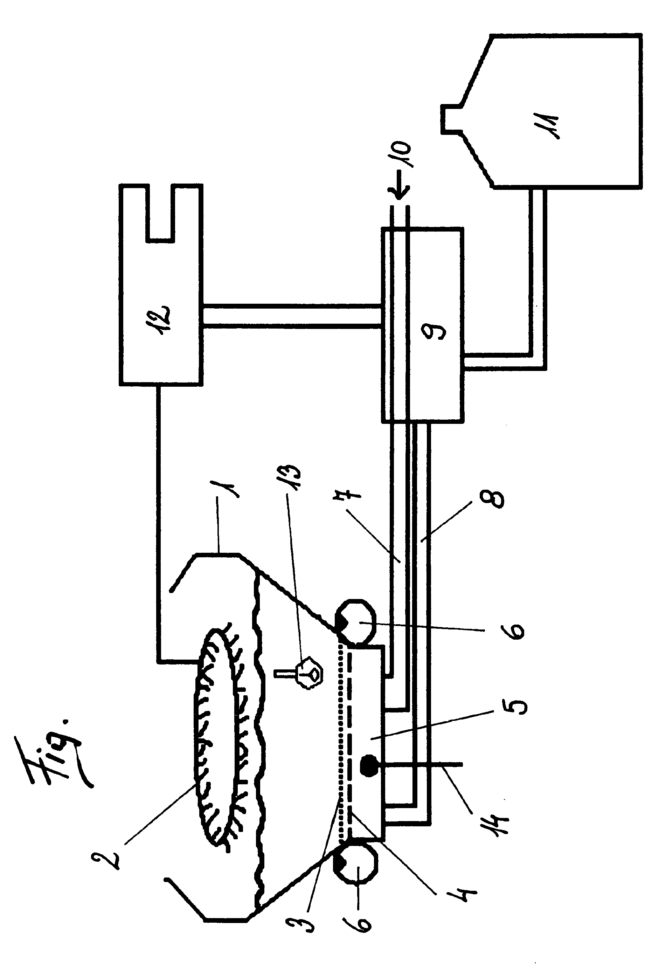

Die Erfindung wird an Hand eines in der Zeichnung dargestellten Ausführungsbeispieles näher erläutert.

Die Fig. zeigt eine schematische Darstellung der Anlage mit dem in die Anlage integrierten Mischbehälter.

Zur Gewinnung von Kaliumkarbonat aus Asche von biogenen Brennstoffen, insbesondere Biomasseasche, die bei Verbrennungstemperaturen über 700°C, insbesondere über 800°C, anfällt, wird in einem Mischbehälter 1 die Asche in einem Mischvorgang mit Wasser befeuchtet, so dass sie einen Wassergehalt von etwa 10-100%, vorzugsweise 40-60%, aufweist. Die Befeuchtung der Asche erfolgt über eine Wasserzuführung, insbesondere eine Sprühdüsenanordnung 2, die über dem nach oben offenen Mischbehälter 1 oder im oberen Bereich des Mischbehälters 1 angeordnet ist.

Natürlich kann die Asche vor dem Befeuchten mit Wasser einer analytischen Qualitätskontrolle unterzogen werden.

Der für den Mischvorgang vorgesehene Mischbehälter 1 ist in seinem unteren Bereich konisch ausgebildet und mit einem Siebboden 3 und gegebenenfalls einem Tragrost 4 versehen. Der Tragrost 4 schließt zu einer Auffangwanne 5 nach unten ab. Der Mischbehälter 1 ist über mindestens einen Schwingungserreger 6 bewegbar.

Der Mischbehälter 1 kann auch als lang gestreckte Wanne ausgebildet sein, wobei der Transport der befeuchteten Asche über gerichtete Schwingungen erfolgt, die von zwei Schwingungserregern 6 erzeugt werden.

Die mit Wasser befeuchtete Asche wird mit Kohlendioxid, insbesondere einer Kohlendioxid enthaltenden Abluft, wie beispielsweise einer Verbrennungsabluft, bis zum Eintritt einer Neutralisation der alkalischen Hydroxide karbonatisiert. Die Zuführung der Abluft erfolgt über die Rohrleitung 7. Während der Karbonatisierung wird die Asche im Mischbehälter 1 über die Schwingungserreger 6 bewegt.

Die Reaktionstemperatur beim Vorgang der Karbonatisierung darf ― wie bereits erwähnt - 100°C nicht überschreiten.

Anschließend wird aus dem entstandenen Asche-Granulat das Kaliumkarbonat mit Wasser heraus gewaschen, bis der Kaliumkarbonat-Gehalt des Granulates gegen Null geht. In einem Batch-Betrieb wird über die Sprühdüsenanordnung 2 das Wasser für den Waschvorgang in den Mischbehälter 1 eingeleitet.

Im Falle einer kontinuierlichen Gewinnung in einer lang gestreckten Wanne wird mindestens eine zweite Wasserzuführung vorzusehen sein.

Das mit dem Wasser heraus gewaschene Kaliumkarbonat wird in der Auffangwanne 5 gesammelt. Um nun die Kaliumkarbonat-Lösung, also das Eluat, auf eine 10-61%ige, vorzugsweise 40-50%ige, Lösung einzudampfen, wird die Kaliumkarbonat-Lösung über die Rohrleitung 8 einem Verdampfer 9 zugeführt.

Der Verdampfer 9 könnte durchaus als Wärmetauscher ausgebildet sein, wobei zur Erhöhung der Wirtschaftlichkeit der Anlage die aus einem Heizwerk stammende Abluft bereits über eine durch den Verdampfer 9 führende verlängerte Rohrleitung 10 genützt werden kann.

Die im Verdampfer 9 gewonnene, vorzugsweise 40-50%ige, Lösung wird in einem Behälter 11 gesammelt.

Im Verdampfer 9 wird das Kaliumkarbonat in einem Verdampfungsprozess konzentriert und die Karbonate der weiteren Kationen fallen als feste Salze aus. Zur Ausbringung dieser Salze aus dem Verdampfer 9 weist dieser eine entsprechende verschließbare Öffnung auf.

Die im Mischbehälter 1 verbleibende Rest-Asche wird nach dem Herauswaschen des Kaliumkarbonates getrocknet. Im kontinuierlichen Gewinnungsprozess wird man eine Trocknungsstrecke vorsehen.

Um nun eine weitere Erhöhung der Wirtschaftlichkeit zu erreichen, wird das aus dem Verdampfer 9 entweichende Kondensat in einem Kondensator 12 regeneriert. Der Kondensator 12 kann dann weiters mit der Wasserzuführung des Mischbehälters 1 verbunden sein.

Zu einer Optimierung des Verfahrens wird die Reaktionstemperatur während des Karbonatisierens, vorzugsweise kontinuierlich, gemessen und der aufgezeichnete Temperaturverlauf zur Kontrolle der Reaktion, insbesondere zur Regelung der Zufuhr von Kohlendioxid, herangezogen. Für diesen Zweck ist im Mischbehälter 1 ein Temperatursensor 13 vorgesehen. Die Reaktionszeit beim Vorgang der Karbonatisierung wird über die Zuführung des Kohlendioxids gesteuert.

Eine weitere Erhöhung der Qualität wird dadurch erreicht, dass der pH-Wert der Asche und/oder des Eluates, vorzugsweise kontinuierlich, gemessen wird. Zur Messung des pH-Wertes des Eluates ist in der Auffangwanne 5 ein pH-Fühler 14 vorgesehen.

Der Ordnung halber sei darauf hingewiesen, dass in der Zeichnung einzelne Bauteile und Baugruppen zum besseren Verständnis der Erfindung unpropotional und maßstäblich verzerrt dargestellt sind.

Abschließend wird die Erfindung noch durch Beispiele verdeutlicht.

### Beispiel 1:

Asche von einem Biomassefernheizwerk, wobei die Karbonatisierung mit Kohlendioxid und gleichzeitig die Eluierung mit Wasser erfolgt.

Ascheausgangsanalyse: Trockensubstanz 99,4 %, Kaliumgehalt 70 g/kg atro Asche entspricht 7 %

Einwaage Asche: 1500 g = 1491 g atro
Eluat gewonnen: 1890 g insgesamt
Kaliumkarbonat gewonnen: 67,8 % des theoretischen Gesamtgehaltes

Restasche:
Trockensubstanz 71,9 %
Restkaliumgehalt 21,5 %
pH-Wert: 12

Eluatwerte der Restasche:
PH-Wert: 12
EI. Leitfähigkeit: 320 mS/m
Abdampfrückstand: 1690 mg/l

Beispiel 1 zeigt, dass bei gleichzeitigem Eluieren und Karbonatisieren zwar auch ein erheblicher Anteil an Kaliumkarbonat gewonnen werden kann. Allerdings werden ebenfalls erhebliche Mengen Kalzium- und Magnesiumhydroxide mitgeschleppt, welche in weiterer Folge durch die Einwirkung von gelöstem Kohlendioxid zu Karbonaten umgesetzt werden. Diese Karbonate fallen in der gesamten Anlage aus und führen zu Verkrustungen und Verstopfungen in den Sieben. Das Eluat ist trüb und leicht gelblich.

### Beispiel 2

Asche von einem Biomassefernheizwerk, wobei das Karbonatisieren mit Kohlendioxid bis zum Abklingen der Reaktion und anschließendes Eluieren mit Wasser erfolgt.

Ascheausgangsanalyse: Trockensubstanz 99,4 %, Kaliumgehalt 70 g/kg atro Asche entspricht 7 %

Einwaage Asche: 1500 g = 1491 g atro
Anfeuchten mit 500 g Wasser
Umsetzen mit Kohlendioxid (CO2)
Reaktionstemperatur steigt auf ein Maximum von 55 °C und klingt nach 24 Stunden ab

Eluat gewonnen: 2450 g insgesamt
Kaliumkarbonat gewonnen: 69 % des theoretischen Gesamtgehaltes

Restasche:
Trockensubstanz 72,2 %
Restkaliumgehalt 21,1 %

Eluatwerte der Restasche:
pH-Wert: 11,6
EI. Leitfähigkeit: 290 mS/m
Abdampfrückstand: 1540 mg/l

In Beispiel 2 wird ersichtlich, dass durch die Umsetzung der angefeuchteten Asche mit kohlendioxidhältiger Luft, die enthaltenen Oxide bzw. Hydroxide zu den unlöslicheren Karbonaten umgesetzt werden. Dadurch werden die Hauptbestandteile Kalziumkarbonat und Magnesiumkarbonat in der verbleibenden Restasche immobilisiert und führen zur Festigkeitssteigerung der entstandenen Granulatteilchen.

Das Eluat ist klar und anfänglich von leicht gelblicher Farbe. Beim Eindampfen des Eluates fallen die gelösten Anteile Kalzium- und Magnesiumkarbonat in geringen Mengen aus und können leicht abfiltriert werden.

In den Sieben des Eluierungsgefäßes kommt es zu keinen Verkrustungen. Die Restasche fällt in der Form kleiner Granulatkügelchen an.

## Patentansprüche

1. Verfahren zur Gewinnung von Kaliumkarbonat aus Asche von biogenen Brennstoffen, insbesondere Biomasseasche, die bei Verbrennungstemperaturen über 700°C, insbesondere über 800°C, anfällt,
**dadurch gekennzeichnet, dass**
- die Asche in einem Mischvorgang mit Wasser befeuchtet wird, so dass sie einen Wassergehalt von etwa 10-100%, vorzugsweise 40-60%, aufweist,
- dass die mit Wasser befeuchtete Asche mit Kohlendioxid, insbesondere einer Kohlendioxid enthaltenden Abluft, wie beispielsweise Verbrennungsabluft, bis zum Eintritt einer Neutralisation der alkalischen Hydroxide karbonatisiert wird, wobei während des Vorganges die Asche bewegt wird und
- anschließend aus dem entstandenen Asche-Granulat das Kaliumkarbonat mit Wasser heraus gewaschen wird, bis der Kaliumkarbonat-Gehalt des Granulates gegen Null geht und
- dass die Kaliumkarbonat-Lösung auf eine 10-61 %ige, vorzugsweise 40-50%ige, Lösung eingedampft wird.

2. Verfahren nach Anspruch 1, **dadurch gekennzeichnet, dass** die Asche vor dem Befeuchten mit Wasser einer analytischen Qualitätskontrolle unterzogen wird.

3. Verfahren nach Anspruch 1 oder 2, **dadurch gekennzeichnet**, die Reaktionstemperatur beim Vorgang der Karbonatisierung 100°C nicht überschreitet.

4. Verfahren nach einem oder mehreren der Ansprüche 1 bis 3, **dadurch gekennzeichnet, dass** die Reaktionstemperatur während des Karbonatisierens, vorzugsweise kontinuierlich, gemessen wird und der aufgezeichnete Temperaturverlauf zur Kontrolle der Reaktion, insbesondere zur Regelung der Zufuhr von Kohlendioxid, herangezogen wird.

5. Verfahren nach einem oder mehreren der Ansprüche 1 bis 4, **dadurch gekennzeichnet, dass** die Reaktionszeit beim Vorgang der Karbonatisierung über die Zuführung des Kohlendioxids gesteuert wird.

6. Verfahren nach einem oder mehreren der Ansprüche 1 bis 5, **dadurch gekennzeichnet, dass** der pH-Wert der Asche und/oder des Eluates, vorzugsweise kontinuierlich, gemessen wird.

7. Verfahren nach einem oder mehreren der Ansprüche 1 bis 6, **dadurch gekennzeichnet, dass** die Asche nach dem Herauswaschen des Kaliumkarbonates getrocknet wird.

8. Verfahren nach einem oder mehreren der Ansprüche 1 bis 7, **dadurch gekennzeichnet, dass** das Kaliumkarbonat in einem Verdampfungsprozess konzentriert wird und die Karbonate der weiteren Kationen als feste Salze ausfallen.

9. Einrichtung zur Durchführung des Verfahrens nach einem oder mehreren der Ansprüche 1 bis 8, **dadurch gekennzeichnet, dass** für den Mischvorgang ein Mischbehälter (1) vorgesehen ist, der in seinem unteren Bereich konisch ausgebildet ist und mit einem Siebboden (3) und gegebenenfalls einem Tragrost (4) zu einer Auffangwanne (5) nach unten abschließt, wobei der Mischbehälter (1) über mindestens einen Schwingungserreger (6) bewegbar ist.

10. Einrichtung nach Anspruch 9, **dadurch gekennzeichnet, dass** über dem nach oben offenen Mischbehälter (1) oder im oberen Bereich des Mischbehälters (1) eine Wasserzuführung, insbesondere eine Sprühdüsenanordnung (2), vorgesehen ist.

11. Einrichtung nach Anspruch 9 oder 10, **dadurch gekennzeichnet, dass** der Mischbehälter (1) als lang gestreckte Wanne ausgebildet ist, wobei der Transport der befeuchteten Asche über, von den Schwingungserregern (6) erzeugte, gerichtete Schwingungen erfolgt.

12. Anlage zur Durchführung des Verfahrens mit einer Einrichtung nach einem oder mehreren der Ansprüche 1 bis 11, **dadurch gekennzeichnet, dass** die Auffangwanne (5) des Mischbehälters (1) für das Eluat mit einem Verdampfer (9) über eine Rohrleitung (8) verbunden ist und der Verdampfer (9) als Wärmetauscher ausgebildet ist.

13. Anlage nach Anspruch 12, **dadurch gekennzeichnet, dass** der Verdampfer (9) zur Gewinnung der mitgeschleppten und durch die Aufkonzentration und Erwärmung ausgefallenen Fremdsalze ausgebildet ist.

14. Anlage nach Anspruch 12 oder 13, **dadurch gekennzeichnet, dass** kohlendioxidhaltige Verbrennungsluft eines Biomasse-Heizkraftwerkes in den Wärmetauscher des Verdampfers (9) und anschließend zur Karbonatisierung in den Mischbehälter (1) geleitet wird.

15. Anlage nach einem oder mehreren der Ansprüche 12 bis 14, **dadurch gekennzeichnet, dass** das aus dem Verdampfer (9) entweichende Kondensat in einem Kondensator (12) regeneriert wird, wobei der Kondensator (12) mit der Wasserzuführung des Mischbehälters (1) verbunden ist.

16. Verwendung von einer Kaliumkarbonatlösung nach einem oder mehreren der Ansprüche 1 bis 15, **dadurch gekennzeichnet, dass** die Kaliumkarbonatlösung als Auftaumittel und/oder zur Herstellung von abstumpfenden Streumitteln und/oder zur Gewinnung von festem Kaliumkarbonat Verwendung findet.
